# EUROPEAN PATENT SPECIFICATION

(11) **EP 0 850 293 B1**
(45) Date of publication and mention of the grant of the patent: **17.10.2001**
(21) Application number: 96929808.2
(22) Date of filing: 29.08.1996
(51) Int. Cl.: C11D 3/33, C23C 18/40, B01D 53/52, B01D 53/60, G03C 7/42

(54) **SUCCINIC ACID DERIVATIVE DEGRADABLE CHELANTS, USES AND COMPOSITIONS THEREOF**
ABBAUBARE CHELATE AUS BERNSTEINSÄURE DERIVATE, VERWENDUNGEN UND ZUSAMMENSETZUNG DERSELBEN
CHELATANTS DEGRADABLES DERIVES DE L'ACIDE SUCCINIQUE, LEURS UTILISATIONS ET COMPOSITIONS

(30) Priority: 30.08.1995 US 3042 P
(43) Date of publication of application: 01.07.1998
(73) Proprietor: THE DOW CHEMICAL COMPANY, Midland, Michigan 48674 (US)
(72) Inventor: WILSON, David, A., Richwood, TX 77531 (US); CRUMP, Druce, K., Lake Jackson, TX 77566 (US)
(74) Representative: Weiss, Wolfgang, Dipl.-Chem. Dr.
(86) International application number: US9613940
(87) International publication number: WO9708288

(56) References cited:
- EP-A- 0 267 653
- EP-A- 0 361 088
- EP-A- 0 567 126
- WO-A-94/03572
- WO-A-94/11099
- WO-A-94/20599
- WO-A-94/28464
- WO-A-95/12570
- GB-A- 757 704

## Description

This invention relates to chelants, particularly uses of certain synergistic combinations of degradable chelants.

Chelants or chelating agents are compounds which form coordinate covalent bonds with a metal ion to form chelates. Chelates are coordination compounds in which a central metal atom is bonded to two or more other atoms in at least one other molecule (called ligand) such that at least one heterocyclic ring is formed with the metal atom as part of each ring.

Chelants are used in a variety of applications including food processing, soaps, detergents, cleaning products, personal care products, pharmaceuticals, pulp and paper processing, gas conditioning, water treatment, metalworking and metal plating solutions, textile processing solutions, fertilizers, animal feeds, herbicides, rubber and polymer chemistry, photofinishing, and oil field chemistry. Some of these activities result in chelants entering the environment. For instance, agricultural uses or detergent uses may result in measurable quantities of the chelants being in water. It is, therefore, desirable that chelants degrade after use.

Biodegradability, that is susceptibility to degradation by microbes, is particularly useful because the microbes are generally naturally present in environments into which the chelants may be introduced. Commonly used chelants like EDTA (ethylenediamine tetraacetic acid) are biodegradable, but at rates somewhat slower and under conditions considered by some to be less than optimum. (See, Tiedje, "Microbial Degradation of Ethylenediaminetetraacetate in Soils and Sediments," Applied Microbiology, Aug. 1975, pp. 327-329.) It would be desirable to have a chelating agent which degrades faster than EDTA or other commonly used chelants.

Biodegradation of chelants is of particular interest in many metal ion control applications. Examples include use of chelants in the following areas: electroless copper plating, prevention or removal of undesirable iron deposits, removal of organic stains from fabrics, scrubbing of H₂S and/or NO_{X} from gas streams via metal chelates, stabilizing peroxide in cellulosic bleaching systems, and others. However, finding a commercially useful biodegradable chelant for these applications has been difficult. The chelating agents that are most useful generally do not biodegrade in a desirable time (e.g. ethylenediaminetetraacetic acid, N-hydroxyethylethylenediaminetriacetic acid, diethylenetriaminepentaacetic acid, cyclohexanediaminetetraacetic acid, and propylenediaminetetraacetic acid) all biodegrade less than 60% in 28 days using the OECD 301 B Modified Sturm Test.

It would be desirable to have a chelant, or a mixture of chelants, useful in metal ion control processes, where such chelant or mixture of chelants is greater than 60 percent biodegradable within less than 28 days according to the OECD 301 B Modified Sturm Test.

A combination of chelants, or metal chelates thereof, comprising at least one polyamino disuccinic acid and one or more polyamino monosuccinic acids, or salts thereof have been found to be excellent for use in metal ion control applications where enhanced biodegradability is desired. It has been found that certain mixtures of chelants display unexpected metal ion control performance and ease of biodegradability

In one aspect, the invention includes methods of electroless plating using various metals (especially copper) complexed with a mixture of chelants comprising at least one polyamino disuccinic acid and one or more polyamino monosuccinic acids, or salts thereof. It includes a method of electroless deposition of copper upon a non-metallic surface receptive to the deposited copper including a step of contacting the non-metallic surface with an aqueous solution comprising a soluble copper salt and at least one polyamino disuccinic acid and one or more polyamino monosuccinic acids, or salts thereof. Also included is a method of electroless copper plating which comprises immersing a receptive surface to be plated in an alkaline, autocatalytic copper bath comprising water, a water soluble copper salt, and at least one polyamino disuccinic acid and one or more polyamino monosuccinic acids, or salts thereof as the complexing agents for cupric ion. Additionally, there is an improvement in a process for plating copper on non-metallic surfaces, only selected portions of which have been pretreated for the reception of electroless copper, by immersing the surface in an autocatalytic alkaline aqueous solution comprising, in proportions capable of effecting electroless deposition of copper, a water soluble copper salt, a complexing agent for cupric ion, and a reducing agent for cupric ion, the improvement comprising using as the complexing agent for cupric ion, at least one polyamino disuccinic acid and one or more polyamino monosuccinic acids, or salts thereof. The invention includes a bath for the electroless plating of copper which comprises water, a water soluble copper salt, at least one polyamino disuccinic acid and one or more polyamino monosuccinic acids, or salts thereof as complexing agents for cupric ions, sufficient alkali metal hydroxide to result in a pH of from10 to 14, and a reducing agent.

Another aspect of the invention includes a method for removing iron oxide deposits or organic stains from a surface including a step of contacting the deposits or stains with a solution comprising at least one polyamino disuccinic acid and one or more polyamino monosuccinic acids, or salts thereof.

Yet another aspect of the invention involves gas conditioning. In this aspect the invention includes a process of removing H₂S from a fluid comprising contacting said fluid with an aqueous solution at a pH suitable for removing H₂S wherein said solution contains at least one higher valence polyvalent metal chelate of at least one polyamino disuccinic acid and one or more polyamino monosuccinic acids, or salts thereof. Another aspect of the gas conditioning invention includes a process of removing NOₓ from a fluid comprising contacting the fluid with an aqueous solution of at least one lower valence state polyvalent metal chelate of at least one polyamino disuccinic acid and one or more polyamino monosuccinic acids, or salts thereof.

The present invention is also to a laundry detergent composition comprising (a) from1% to 80% by weight of a detergent surfactant selected from nonionic, anionic, cationic, zwitterionic, and ampholytic surfactants and mixtures thereof; (b) from 5% to 80% by weight of at least one detergent builder; and (c) from 0.1 % to 15% by weight of a combination of chelants comprising at least one polyamino disuccinic acid and one or more polyamino monosuccinic acids, or salts thereof.

In another aspect, the present invention is a liquid laundry detergent composition comprising (a) from 10% to 50% by weight of a detergent surfactant selected from nonionic, anionic, cationic, zwitterionic, and ampholytic surfactants and mixtures thereof; (b) from 10% to 40% by weight of at least one detergent builder; and (c) from 0.1% to 10% by weight of a combination of chelants comprising at least one polyamino disuccinic acid and one or more polyamino monosuccinic acids, or salts thereof.

The present invention is also to a granular laundry composition comprising (a) from 5% to 50% by weight of a detergent surfactant selected from nonionic, anionic, cationic, zwitterionic, and ampholytic surfactants and mixtures thereof; (b) from 10% to 40% by weight of at least one detergency builder; and (c) from 0.1% to 10% by weight of a combination of chelants comprising at least one polyamino disuccinic acid and one or more polyamino monosuccinic acids, or salts thereof.

The above laundry compositions are used in a method of laundering fabrics comprising contacting a fabric with an aqueous solution of the above noted laundry detergent compositions.

The present invention is to the use of a mixture of at least one polyamino disuccinic acid and one or more polyamino monosuccinic acids, or salts thereof (also referred to herein as succinic acid mixtures). It has been unexpectedly found that when a mixture of such compounds is used to chelate a metal ion, such as iron, said mixtures show a greater ability to chelate the metal ion and such complexes have a greater stability than what would be expected from the sum of the individual compounds. Such mixtures also show an unexpected increase in biodegradability as measured by the OECD 301B Modified Sturm Test.

Polyamino disuccinic acids are compounds having two or more nitrogen atoms wherein 2 of the nitrogens are bonded to a succinic acid (or salt) group, preferably only two nitrogen atoms each have one succinic acid (or salt) group attached thereto. As used herein the term succinic acid includes salts thereof. The compound has at least 2 nitrogen atoms, and due to the commercial availability of the amine, preferably has no more than 10 nitrogen atoms, more preferably no more than about 6, most preferably 2 nitrogen atoms. Remaining nitrogen atoms most preferably are substituted with hydrogen atoms. More preferably, the succinic acid groups are on terminal nitrogen atoms, most preferably each of which nitrogens also has a hydrogen substituent. Because of steric hindrance of two succinic groups on one nitrogen, it is preferred that each nitrogen having a succinic group has only one such group. Remaining bonds on nitrogens having a succinic acid group are preferably filled by hydrogens or alkyl or alkylene groups (linear, branched or cyclic including cyclic structures joining more than one nitrogen atom or more than one bond of a single nitrogen atom, preferably linear) or such groups having ether or thioether linkages, all of preferably from 1 to 10 carbon atoms, more preferably from 1 to 6, most preferably from 1 to 3 carbon atoms, but most preferably hydrogen. More preferably, the nitrogen atoms are linked by alkylene groups, preferably each of from 2 to 12 carbon atoms, more preferably from 2 to 10 carbon atoms, even more preferably from 2 to 8, most preferably from 2 to 6 carbon atoms. The polyamino disuccinic acid compound preferably has at least 10 carbon atoms and preferably has at most 50, more preferably at most 40, most preferably at most 30 carbon atoms. The term "succinic acid" is used herein for the acid and salts thereof; the salts include metal cation (e.g. potassium, sodium) and ammonium or amine salts. Polyamino disuccinic acids useful in the practice of the invention are unsubstituted (preferably) or inertly substituted, that is substituted with groups that do not undesirably interfere with the activity of the polyamino disuccinic acid in a selected application. Such inert substituents include alkyl groups (preferably of from 1 to 6 carbon atoms); aryl groups including arylalkyl and alkylaryl groups (preferably of from 6 to 12 carbon atoms), with alkyl groups preferred among these and methyl and ethyl groups preferred among alkyl groups. Inert substituents are suitably on any portion of the molecule, preferably on carbon atoms, more preferably on alkylene groups, for example alkylene groups between nitrogen atoms or between carboxylic acid groups, most preferably on alkylene groups between nitrogen groups.

Preferred polyamino disuccinic acids include ethylenediamine-N,N'-disuccinic acid, diethylenetriamine-N,N"-disuccinic acid, triethylenetetraamine-N,N"'-disuccinic acid, 1,6-hexamethylenediamine N,N'-disuccinic acid, tetraethylenepentamine-N,N""-disuccinic acid, 2-hydroxypropylene-1,3-diamine-N,N'-disuccinic acid, 1,2-propylenediamine-N, N'-disuccinic acid, 1,3-propylenediamine-N,N'-disuccinic acid, cis-cyclohexanediamine-N,N'-disuccinic acid, transcyclohexanediamine-N,N'-disuccinic acid, and ethylenebis(oxyethylenenitrilo)-N,N'-disuccinic acid. The preferred polyamino disuccinic acid is ethylenediamine-N,N'-disuccinic acid.

Such polyamino disuccinic acids can be prepared, for instance, by the process disclosed by Kezerian et al. in U.S. Patent 3,158,635. Kezerian et al disclose reacting maleic anhydride (or ester or salt) with a polyamine corresponding to the desired polyamino disuccinic acid under alkaline conditions. The reaction yields a number of optical isomers, for example, the reaction of ethylenediamine with maleic anhydride yields a mixture of three optical isomers [R,R], [S,S] and [S,R] ethylenediamine disuccinic acid (EDDS) because there are two asymmetric carbon atoms in ethylenediamine disuccinic acid. These mixtures are used as mixtures or alternatively separated by means within the state of the art to obtain the desired isomer(s). Alternatively, [S,S] isomers are prepared by reaction of such acids as L-aspartic acid with such compounds as 1,2-dibromoethane as described by Neal and Rose, "Stereospecific Ligands and Their Complexes of Ethylenediaminedisuccinic Acid", Inorganic Chemistry, v. 7. (1968), pp. 2405-2412.

Polyamino monosuccinic acids are compounds having at least two nitrogen atoms to which a succinic acid (or salt) moiety is attached to one of the nitrogen atoms. Preferably the compound has at least 2 nitrogen atoms, and due to the commercial availability of the amine, preferably has no more than about 10 nitrogen atoms, more preferably no more than 6, most preferably 2 nitrogen atoms. Remaining nitrogens atoms, those which do not have a succinic acid moiety attached, preferably are substituted with hydrogen atoms. Although the succinic acid moiety may be attached to any of the amines, preferably the succinic acid group is attached to a terminal nitrogen atom. By terminal it is meant the first or last amine which is present in the compound, irrespective of other substituents. The remaining bonds on the nitrogen having a succinic acid group are preferably filled by hydrogens or alkyl or alkylene groups (linear, branched or cyclic including cyclic structures joining more than one nitrogen atom or more than one bond of a single nitrogen atom, preferably linear) or such groups having ether or thioether linkages, all of preferably from 1 to 10 carbon atoms, more preferably from 1 to 6, most preferably from 1 to 3 carbon atoms, but most preferably hydrogen. Generally the nitrogen atoms are linked by alkylene groups, each of from 2 to 12 carbon atoms, preferably from 2 to 10 carbon atoms, more preferably from 2 to 8, and most preferably from 2 to 6 carbon atoms. The polyamino monosuccinic acid compound preferably has at least 6 carbon atoms and preferably has at most 50, more preferably at most 40, and most preferably at most 30 carbon atoms. Polyamino monosuccinic acids useful in the practice of the invention are unsubstituted (preferably) or inertly substituted as described above for polyamino disuccinic acid compounds.

Preferred polyamino monosuccinic acids include ethylenediamine monosuccinic acid, diethylenetriamine monosuccinic acid, triethylenetetraamine monosuccinic acid, 1,6-hexamethylenediamine monosuccinic acid, tetraethylenepentamine monosuccinic acid, 2-hydroxypropylene-1,3-diamine monosuccinic acid, 1,2-propylenediamine monosuccinic acid, 1,3-propylenediamine monosuccinic acid, cis-cyclohexanediamine monosuccinic acid, trans-cyclohexanediamine monosuccinic acid and ethylenebis(oxyethylenenitrilo) monosuccinic acid. The preferred polyamino monosuccinic acid is ethylenediamine monosuccinic acid.

Such polyamino monosuccinic acids can be prepared for instance, by the process of Bersworth et al. in U.S. Patent 2,761,874 and as disclosed in Jpn. Kokai Tokkyo Koho JP 57,116,031. In general, Bersworth et al. disclose reacting alkylene diamines and dialkylene triamines with maleic acid esters under mild conditions (in an alcohol) to yield amino derivatives of N-alkyl substituted aspartic acid. The reaction yields a mixture of the R and S isomers.

In a preferred embodiment, when the chelant solution contains a mixture of a polyamino disuccinic acid and a polyamino monosuccinic acid, it is preferred that the polyamino substituent of the polyamino disuccinic acid and the polyamino monosuccinic acid are the same. Thus by way of example, if the polyamino disuccinic acid is ethylenediamine-N-N'-disuccinic acid, the polyamine monosuccinic acid is ethylenediamine monosuccinic acid.

The invention includes the use of iron complexes of a polyamino disuccinic acid and a polyamino monosuccinic acid in abatement of hydrogen sulfide and other acid gases and as a source of iron in plant nutrition. Similarly other metal complexes such as the copper, zinc and manganese complexes supply those trace metals in plant nutrition. The ferrous complexes are also useful in nitrogen oxide abatement.

Iron complexes used in the present invention are conveniently formed by mixing an iron compound with an aqueous solution of the succinic acid mixtures, or salts thereof. The pH values of the resulting iron chelate solutions are preferably adjusted with an alkaline material such as ammonia solution, sodium carbonate, or dilute caustic (NaOH). Water soluble iron compounds are conveniently used. Exemplary iron compounds include iron nitrate, iron sulfate, and iron chloride. The final pH values of the iron chelate solutions are preferably in the range of 4 to 9, more preferably in the range of 5 to 8. When an insoluble iron source, such as iron oxide, is used, the succinic acid compounds are preferably heated with the insoluble iron source in an aqueous medium at an acidic pH. The use of ammoniated amino succinic acid solutions is particularly effective. Ammoniated amino succinic acid chelants are conveniently formed by combining aqueous ammonia solutions and aqueous solutions or slurries of amino succinic acids in the acid (rather than salt) form.

Succinic acid mixtures are effective as chelants especially for metals such as iron and copper. Effectiveness as a chelant is conveniently measured by complexing the chelant with a metal such as copper such as by mixing an aqueous solution of known concentration of the chelant with an aqueous solution containing copper (II) ions of known concentration and measuring chelation capacity by titrating the chelant with copper in the presence of an indicator dye.

The succinic acid compounds are preferably employed in the form of water-soluble salts, notably alkali metal salts, ammonium salts, or alkyl ammonium salts. The alkali metal salts can involve one or a mixture of alkali metal salts although the potassium or sodium salts, especially the partial or complete sodium salts of the acids are preferred.

Succinic acid mixtures are also useful, for instance, in food products vulnerable to metal-catalyzed spoilage or discoloration; in cleaning products for removing metal ions, that may reduce the effectiveness, appearance, stability, rinsibility, bleaching effectiveness, germicidal effectiveness or other property of the cleaning agents; in personal care products like creams, lotions, deodorants and ointments to avoid metal-catalyzed oxidation and rancidity, turbidity, reduced shelf-life ; in pulp and paper processing to enhance or maintain bleaching effectiveness; in pipes, vessels, heat exchangers, evaporators, filters to avoid or remove scaling, in pharmaceuticals; in metal working; in textile preparation, desizing, scouring, bleaching, dyeing ; in agriculture as in chelated micronutrients or herbicides; in polymerization or stabilization of polymers; in the oil field such as for drilling, production, recovery, hydrogen sulfide abatement.

The chelants can be used in industrial processes whenever metal ions such as iron or copper are a nuisance and are to be prevented.

The succinic acid mixtures disclosed in the present application may be used in a variety of applications, as is disclosed for the use of disuccinic acid compounds in WO 94/05674 published May 20, 1994. These uses include the use of succinic acid mixtures for the electroless deposition of metals such as nickel and copper; in the polymerization of rubber; in the textile industry; in agriculture to supply micronutrients; and in gas conditioning to remove H₂S, nitrous oxides (NOₓ) and SO₂.

The use of chelating agents in removal of H₂S is further exemplified by United States Patents 4,421,733; 4,614,644; 4,629,608; 4,683,076; 4,696,802; 4,774,071; 4,816,238 and 4,830,838. Gas conditioning for removal of NOₓ or SO₂ compounds is further described in United States Patents 4,732,744; 4,612,175; 4,708,854; 4,615,780; 4,126,529; 4,820,391 and 4,957,716.

Succinic acid mixtures are also useful in laundry detergents, particularly laundry detergents containing a detergent surfactant and builder. The mixtures of the succinic acids facilitate the removal of organic stains such as tea stains, grape juice stains and various food stains from fabrics during laundering operations. The stains are believed to contain metals such as copper and iron. The succinic acid mixtures are very effective in chelating these metals and thus aids in the removal of the troublesome stain. The compositions comprise from 1 % to 80% by weight of a detergent surfactant, preferably from 10% to 50%, selected from nonionic surfactants, anionic surfactants, cationic surfactants, zwitterionic surfactants, ampholytic surfactants and mixturtes thereof; from 5% to 80% by weight of a detergent builder, preferably from 10% to 50%; and from 0.1% to 15% by weight of amino succinic acids, preferably from 1 % to 10%, or alkali metal, alkaline earth, ammonium or substituted ammonium salt thereof, or mixtures thereof.

When used in detergent applications, including dishwashing compositions, the molar ratio of the polyamino disuccinic acid to the polyamino monosuccinic acid is from 99:1 to 5:95.

Nonionic surfactants that are suitable for use in the present invention include those that are disclosed in U.S. 3,929,678 (Laughlin et al.).Included are the condensation products of ethylene oxide with aliphatic alcohols, the condensation of ethylene oxide with the base formed by the condensation of propylene oxide and propylene glycol or the product formed by the condensation of propylene oxide and ethylendiamine. Also included are the various polyethylene oxide condensates of alkyl phenols and various amine oxide surfactants.

Anionic surfactants that are suitable for use are described in U.S. 3,929,678. These include sodium and potassium alkyl sulfates; various salts of higher fatty acids, and alkyl polyethoxylate sulfates.

Cationic surfactants that may be used are described in U.S. 4,228,044 (Cambre), incorporated herein by reference. Especially preferred cationic surfactants are the quaternary ammonium surfactants.

In addition, ampholytic and zwitterionic surfactants such as those taught in U.S. 3,929,678 can be used in the present invention.

Suitable builder substances are for example: wash alkalis, such as sodium carbonate and sodium silicate, or complexing agents, such as phosphates, or ion exchangers, such as zeolites, and mixtures thereof. These builder substances have as their function to eliminate the hardness ions, which come partially from the water, partially from dirt or textile material, and to support the surfactant action. In addition to the above mentioned builder substances, the builder component may further contain cobuilders. In modern detergents, it is the function of cobuilders to undertake some of the functions of phosphates, for example sequestration, soil antiredeposition and primary and secondary washing action.

The builder components may contain for example water-insoluble silicates, as described for example in German Laid-Open Application DE-OS No. 2,412,837, and/or phosphates. As phosphate it is possible to use pyrophosphates, triphosphates, higher polyphosphates and metaphosphates. Similarly, phosphorus-containing organic complexing agents such as alkanepolyphosphonic acids, amino- and hydroxy-alkanepolyphosphonic acids and phosphonocarboxylic acids, are suitable for use as further detergent ingredients generally referred to as stabilizers or phosphonates. Examples of such detergent additives are the following compounds: methanediphosphonic acid, propane-1,2,3-triphosphonic acid, butane-1,2,3,4-tetraphosphonic acid, polyvinylphosphonic acid, 1-aminoethane,-1,1-diphosphonic acid, aminotrismethylenetriphosphonic acid, methylamino- or ethylamino-bismethylenediphosphonic acid, ethylenediaminetetramethylenephosphonic acid, diethylenetriaminopentamethylenephosphonic acid, 1-hydroxyethane-1,1-diphosphonic acid, phosphonoacetic and phosphonopropionic acid, copolymers of vinylphosphonic acid and acrylic and/or maleic acid and also partially or completely neutralized salts thereof.

Further organic compounds which act as chelants for calcium that may be present in detergent formulations are polycarboxylic acids, hydroxycarboxylic acids and aminocarboxylic acids which are usually used in the form of their water-soluble salts.

Examples of polycarboxylic acids are dicarboxylic acids of the general formula HOOC-(CH₂)ₘ-COOH where m is 0-8, and maleic acid, methylenemalonic acid, citraconic acid, mesaconic acid, itaconic acid, noncyclic polycarboxylic acids having 3 or more carboxyl groups in the molecule, for example tricarballylic acid, aconitic acid, ethylenetetracarboxylic acid, 1,1,3- propanetricarboxylic acid, 1,1,3,3,5,5-pentanehexacarboxylic acid, hexanehexacarboxylic acid, cyclic di- or poly-carboxylic acids ( for example cyclopentanetetracarboxylic acid, cyclohexanehexacarboxylic acid, tetrahydrofurantetracarboxylic acid, phthalic acid, terephthalic acid, benzene-tricarboxylic, -tetra-carboxylic or -pentacarboxylic acid) and mellitic acid.

Examples of hydroxymonocarboxylic and hydroxypolycarboxylic acids are glycollic acid, lactic acid, malic acid, tartronic acid, methyltartronic acid, gluconic acid, glyceric acid, citric acid, tartaric acid and salicylic acid.

Examples of aminocarboxylic acids are glycine, glycylglycine, alanine, asparagine, glutamic acid, aminobenzoic acid, iminodiacetic acid, iminotriacetic acid, hydroxyethyliminodiacetic acid, ethylenediaminetetraacetic acid, hydroxyethylethylenediaminetriacetic acid, diethylenetriaminepentaacetic acid and higher homologues which are prepared by polymerization of an N-aziridylcarboxylic acid derivative, for example of acetic acid, succinic acid or tricarballylic acid, and subsequent hydrolysis, or by condensation of polyamines having a molecular weight of from 500 to 10,000 with salts of chloroacetic or bromoacetic acid.

Preferred cobuilder substances are polymeric carboxylates. These polymeric carboxylic acids include the carboxymethyl ethers of sugars, of starch and of cellulose. Zeolites and phosphates are also useful.

Particularly important polymeric carboxylic acids are for example the polymers of acrylic acid, maleic acid, itaconic acid, mesaconic acid, aconitic acid, methylenemalonic acid, citraconic acid, the copolymers between the aforementioned carboxylic acids, for example a copolymer of acrylic acid and maleic acid in a ration of 70:30 and having a molecular weight of 70,000, or copolymers thereof with ethylenically unsaturated compounds, such as ethylene, propylene, isobutylene, vinyl methyl ether, furan, acrolein, vinyl acetate, acrylamide, acrylonitrile methacrylic acid, crotonic acid, for example the 1:1 copolymers of maleic anhydride and methyl vinyl ether having a molecular weight of 70,000 or the copolymers of maleic anhydride and ethylene and/or propylene and/or furan.

The cobuilders may further contain soil antiredeposition agents which keep the dirt detached from the fiber in suspension in the liquid and thus inhibit graying. Suitable for this purpose are water-soluble colloids usually of an organic nature, for example the water-soluble salts of polymeric carboxylic acids, glue, gelatin, salts of ethercarboxylic acids or ethersulfonic acids of starch and of cellulose or salts of acid sulfates of cellulose and of starch. Even water-soluble polyamides containing acid groups are suitable for this purpose. It is also. possible to use soluble starch products and starch products other than those mentioned above, for example degraded starch, aldehyde starches. Polyvinylpyrrolidone is also usable.

Bleaching agents that can be used are in particular hydrogen peroxide and derivatives thereof or available chlorine compounds. Of the bleaching agent compounds which provide H₂O₂ in water, sodium perborate hydrates, such as NaBO₂.H₂O₂.3H₂O and NaBO₂.H₂O₂ and percarbonates such as 2 Na₂CO₃.3 H₂O₂, are of particular importance. These compounds can be replaced in part or in full by other sources of active oxygen, in particular by peroxyhydrates, such as peroxyphosphonates, citrate perhydrates, urea, H₂O₂-providing peracid salts, for example caroates, perbenzoates or peroxyphthalates or other peroxy compounds.

Aside from those according to the invention, customary water-soluble and/or water-insoluble stabilizers for peroxy compounds can be incorporated together with the former in amounts from 0.25 to 10 percent by weight, based on the peroxy compound. Suitable water-insoluble stabilizers are the magnesium silicates MgO:SiO₂ from 4:1 to 1:4, preferably from 2:1 to 1:2, in particular 1:1, in composition, usually obtained by precipitation from aqueous solutions. Other alkaline earth metals of corresponding composition are also suitably used.

To obtain a satisfactory bleaching action even in washing at below 80°C, in particular in the range from 60°C to 40°C, it is advantageous to incorporate bleach activators in the detergent, advantageously in an amount from 5 to 30 percent by weight, based on the H₂O₂-providing compound.

Activators for peroxy compounds which provide H₂O₂ in water are certain N-acyl and O-acyl compounds, in particular acetyl, propionyl or benzyl compounds, which form organic peracids with H₂O₂ and also carbonic and pyrocarbonic esters. Useful compounds are inter alia:
N-diacylated and N,N'-tetraacylated amines, for example N,N,N',N'-tetraacetyl-methylenediamine or -ethylenediamine, N,N-diacetylaniline and N,N-diacetyl-p-toluidine, and 1,3-diacylated hydantoins, alkyl-N-sulfonyl-carboxamides, N-acylated hydrazides, acylated triazoles or urazoles, for example monoacetylmaleohydrazide, O,N,N-trisubstituted hydroxylamines, for example O-benzoyl-N,N-succinylhydroxylamine, O-acetyl-N,N-succinyl-hydroxylamine, O-p-methoxybenzoyl-N,N-succinyl-hydroxylamine, O-p-nitrobenzoyl-N,N-succinylhydroxylamine and O,N,N-triacetylhydroxylamine, carboxylic anhydrides, for example benzoic anhydride, m-chlorobenzoic anhydride, phthalic anhydride and 4-chlorophthalic anhydride, sugar esters, for example glucose pentaacetate, imidazolidine derivatives, such as 1,3 -diformyl-4,5-diacetoxyimidazolidine, 1,3-diacetyl-4,5-diacetoxyimidazoline and 1,3-diacetyl-4,5-dipropionyloxyimidazolidine, acylated glycolurils, for example tetrapropionylglycoluril or diacetyldibenzoylglycoluril, dialkylated 2,5-diketopiperazines, for example 1,4-dipropionyl-2,5-diketopiperazine and 1,4-dipropionyl-3,6-dimethyl-2,5-diketopiperazine and 1,4-dipropionyl-3,6-2,5-diketopiperazine, acetylation and benzoylation products of propylenediurea or 2,2-dimethylpropylenediurea.

The bleaching agents used can also be active chlorine compounds of the inorganic or organic type. Inorganic active chlorine compounds include alkali metal hypochlorites which can be used in particular in the form of their mixed salts and adducts on orthophosphates or condensed phosphates, for example on pyrophosphates and polyphosphates or on alkali metal silicates. If the detergent contains monopersulfates and chlorides, active chlorine will form in aqueous solution.

Organic active chlorine compounds are in particular the N-chlorine compounds where one or two chlorine atoms are bonded to a nitrogen atom and where preferably the third valence of the nitrogen atom leads to a negative group, in particular to a CO or SO₂ group. These compounds include dichlorocyanuric and trichlorocyanuric acid and their salts, chlorinated alkylguanides or alkylbiguanides, chlorinated hydantoins and chlorinated melamines.

Examples of additional assistants are: suitable foam regulants, in particular if surfactants of the sulfonate or sulfate type are used, are surface-active carboxybetaines or sulfobetaines and also the above mentioned nonionics of the alkylolamide type. Also suitable for this purpose are fatty alcohols or higher terminal diols.

Reduced foaming, which is desirable in particular for machine washing, is frequently obtained by combining various types of surfactants, for example sulfates and/or sulfonates, with nonionics and/or with soaps. In the case of soaps, the foam inhibition increases with the degree of saturation and the number of carbon atoms of the fatty acid ester; soaps of saturated C₂₀-C₂₄-fatty acids, therefore, are particularly suitable for use as foam inhibitors.

The nonsurfactant-like foam inhibitors include optionally chlorine-containing N-alkylated aminotriazines which are obtained by reacting 1 mole of cyanuric chloride with from 2 to 3 moles of a mono- and/or dialkylamine having 6 to 20, preferably 8 to 18, carbon atoms in the alkyl. A similar effect is possessed by propoxylated and/or butoxylated aminotriazines, for example, products obtained by addition of from 5 to 10 moles of propylene oxide onto 1 mole of melamine and further addition of from 10 to 50 moles of butylene oxide onto this propylene oxide derivative.

Other suitable nonsurfactant-like foam inhibitors are water-soluble organic compounds, such as paraffins or haloparaffins having melting points below 100°C, aliphatic C₁₈- to C₄₀-ketones and also aliphatic carboxylic esters which, in the acid or in the alcohol moiety, possibly even both these moieties, contain not less than 18 carbon atoms (for example triglycerides or fatty acid fatty alcohol esters); they can be used in particular in combinations of surfactants of the sulfate and/or sulfonate type with soaps for foam inhibition.

The detergents may contain optical brighteners for cotton, for polyamide, for polyacrylonitrile or for polyester fabrics. Examples of suitable optical brighteners are derivatives of diaminostilbenedisulfonic acid for cotton, derivatives of 1,3-diarylpyrazolines for polyamide, quaternary salts of 7-methoxy-2-benzimidazol-2'-ylbenzofuran or of derivatives form the class of the 7-[1',2',5'-triazol-1'-yl]-3-[1 ",2",4"-triazol-1"-y] coumarins for polyacrylonitrile. Examples of brighteners suitable for polyester are products of the class of the substituted styryls, ethylenes, thiophenes, naphthalenedicarboxylic acids or derivatives thereof, stilbenes, coumarins and naphthalimides.

It is preferred that laundry compositions herein also contain enzymes to enhance their through-the-wash cleaning performance on a variety of soils and stains. Amylase and protease enzymes suitable for use in detergents are well known in the art and in commercially available liquid and granular detergents. Commercial detersive enzymes (preferably a mixture of amylase and protease) are typically used at levels of from 0.001 to 2 weight percent, and higher, in the present cleaning compositions.

Detergent formulations of this invention may contain minor amounts of other commonly used materials in order to enhance the effectiveness or attractiveness of the product. Exemplary of such materials are soluble sodium carboxymethyl cellulose or other soil redeposition inhibitors; benzotriazole, ethylene thiourea, or other tarnish inhibitors; perfume; fluorescers; dyes or pigments; brightening agents; enzymes; water; alcohols; other builder additives, such as the water soluble salts of ethylenediaminetetraacetic acid,
N-(2-hydroxyethyl)-ethylenediaminetriacetic acid; and pH adjusters, such as sodium hydroxide and potassium hydroxide. Other optional ingredients include pH regulants, polyester soil release agents, hydrotropes and gel-control agents, freeze-thaw stabilizers, bactericides, preservatives, suds control agents, fabric softeners especially clays and mixtures of clays with various amines and quaternary ammonium compounds. In the built liquid detergent formulations of this invention, the use of hydrotropic agents may be found efficacious. Suitable hydrotropes include the water-soluble alkali metal salts of toluene sulfonic acid, benzene sulfonic acid, and xylene sulfonic acid. Potassium toluene sulfonate and sodium toluene sulfonate are preferred for this use and will normally be employed in concentrates ranging up to about 10 or 12 percent by weight based on the total composition.

It will be apparent from the foregoing that the compositions of this invention may be formulated according to any of the various commercially desirable forms. For example, the formulations of this invention may be provided in granular form, in liquid form, in tablet form of flakes or powders.

Use of these ingredients is within the skill in the art. Compositions are prepared using techniques within the skill in the art.

The invention will be further clarified by a consideration of the following examples, which are intended to be purely exemplary of the present invention.

### EXAMPLE 1:

An approximate 0.01 M iron (ferric) chelate solution of ethylenediamine N,N'-disuccinic acid (EDDS) was prepared by adding 1.46 grams of EDDS (0.0050 moles) and 200 grams of deionized water to a beaker. The mixture was stirred with a magnetic stirrer bar and the pH was adjusted to approximately 8.7 by the addition of an aqueous ammonia solution. Approximately 2.3 grams of an iron nitrate solution (11.7% iron) from Shepherd Chemical Company was added with stirring. The iron chelate solution (pH = 3.1) was diluted in a volumetric flask to a final volume of 500 milliliters with deionized water. Fifty gram aliquots of the above solution were then placed in 57 cm³ (2 oz.) bottles and the pH adjusted to 5.0, 6.0, 7.0, 8.0, 9.0 and 10.0 by the addition of a few drops of an aqueous ammonia solution. The samples were allowed to stand for 7 days at which time the pH 10 sample had iron hydroxide present. "Overheads" from each of the samples were filtered and analyzed for soluble iron by inductively coupled plasma spectroscopy. The results were given in Table 1.

**TABLE 1**

| pH | ppm Fe |
|---|---|
| 5 | 514 |
| 6 | 530 |
| 7 | 531 |
| 8 | 533 |
| 9 | 514 |
| 10 | 181 |

### EXAMPLE 2:

An approximate 0.01 M iron chelate solution of ethylenediamine N-monosuccinic acid (EDMS) was prepared by adding 0.88 grams of EDMS (0.0050 moles) and 200 grams of deionized water to a beaker. The mixture was stirred with a magnetic stirrer bar and approximately 2.3 grams of iron nitrate solution (11.7% iron) was added with stirring. The iron chelate solution (pH = 2.3) was diluted in a volumetric flask to a final volume of 500 milliliters with deionized water. Fifty gram aliquots of the solution were placed in 2 oz. bottles and the pH adjusted to 5.0, 6.0, 7.0, 8.0, 9.0 and 10.0 by the addition of a few drops of an aqueous ammonia solution. The samples were allowed to stand for 7 days at which time the pH 9 and 10 samples had iron hydroxide present. "Overheads" from each of the samples were filtered and analyzed for soluble iron by inductively coupled plasma spectroscopy. The results were given in Table 2.

**TABLE 2**

| pH | ppm Fe |
|---|---|
| 5 | 499 |
| 6 | 501 |
| 7 | 498 |
| 8 | 507 |
| 9 | 6 |
| 10 | 1 |

### EXAMPLE 3:

In a similar manner to Examples 1 and 2 above, 0.01 molar iron chelate solutions were prepared from various mixtures of EDDS and EDMS. The total amount of chelating agent was held constant at 0.0050 moles. Ratios (molar) of EDDS to EDMS of 90/10, 80/20, 60/40, 40/60, 20/80 and 10/90 were prepared and 50 gram aliquots were adjusted as described earlier. The samples were allowed to stand for 7 days at which time the pH 10 samples at all ratios had iron hydroxide present. In addition, the pH 9 sample at a molar ratio of 10:90 had iron hydroxide present. "Overheads" from each of the samples were filtered and analyzed for soluble iron. The results obtained for the pH 9 samples at each of the ratios is summarized in Table 3. The "expected" value for iron for each ratio was also given as well as the results for EDDS and EDMS. A comparison of the expected ppm iron with the actual values measured demonstrates the synergistic effect obtained from the EDDS/EDMS mixtures. After an additional 17 days, the pH 9 samples at mole ratios of 20:80 and 40:60 had iron hydroxide present. A small amount of iron hydroxide was noted for the 60:40 ratio.

**TABLE 3**

| EDDS/EDMS Molar Ratio | ppm Fe Expected | ppm Fe Found |
|---|---|---|
| 100/0 | ---- | 514 |
| 90/10 | 463 | 519 |
| 80/20 | 412 | 508 |
| 60/40 | 311 | 508 |
| 40/60 | 209 | 499 |
| 20/80 | 108 | 526 |
| 10/90 | 57 | 215 |
| 0/100 | ---- | 6 |

### Example 4:

Samples of EDMS and various isomers of EDDS were tested for biodegradability according to the OECD 301B Modified Sturm Test. The test measures the CO₂ produced by the test compound or standard, which was used as the sole carbon source for the microbes. The following samples were tested:
a) EDMS racemic mixture
b) R,R-EDDS
c) S,S-EDDS
d) EDDS racemic mixture, approx. 25% each R,R-EDDS and S,S-EDDS, and 50% meso-EDDS
e) Sample A: contains 69.8% EDDS racemic mixture, 16.7% EDMS racemic mixture, and 13.5% fumaric acid

Each compound was tested at a 20 ppm dose level (based on EDMS or EDDS component active as the acid form). Each compound was evaluated as a series comprising a test vessel, a standard vessel, and a blank vessel. The seed innoculum for each test compound series was obtained from organisms previously exposed to the respective compound in a semi-continuous activated sludge test. The total volume in the vessels was 2100 ml each. To confirm the viability of each seed innoculum, acetic acid was used as the standard at a concentration of 20 ppm in each series. A blank vessel was used to determine the inherent CO₂ evolved from each respective innoculum. Carbon dioxide captured in respective barium hydroxide traps was measured at various times during the 28-day test period. The cumulative results of the test were summarized in Table 4.

**Table 4.**

| **Sturm Test Results of EDMS and EDDS Samples** | | | |
|---|---|---|---|
| Test Compound | Theoretical mMoles CO₂ | Measured mMoles CO₂ | % Theoretical CO₂ Produced |
| EDMS | 1.43 | 1.08 | 75% |
| R,R-EDDS | 1.44 | 0.21 | 14% |
| S,S-EDDS | 1.44 | 1.03 | 72% |
| EDDS rac. mix | 1.44 | 0.43 | 30% |
| Sample A | 2.05 | 1.40 | 68% |
| Acetate Standards | 1.40 | 1.19 ± 0.12 (ave.) | 85% (ave.) |

Sample A was added to the test cell to achieve a 20 ppm level of the active EDDS in the sample. Therefore, the theoretical total of CO₂ possible was 1.44 mMoles CO₂ from 20 ppm EDDS isomers, plus the theoretical amount of CO₂ from EDMS (0.34 mMoles) and the theoretical amount of CO₂ from fumaric acid (0.27 mMoles). The total theoretical amount of CO₂ possible from this sample was thus 1.44 EDDS + 0.34 EDMS + 0.27 fumaric = 2.05 mMoles CO₂.

Using the experimental data in Table 4, the amount of CO₂ that would be expected to actually be produced by Sample A can be calculated:

As shown in Table 4, the EDMS produced 75% of the theoretical CO₂. The theoretical amount of CO₂ possible from the EDMS present in Sample A was 0.34 mMoles. Thus, multiplying the theoretical amount of CO₂ that could be produced by the EDMS in Sample A by 75% yields an expected amount of 0.34 x 0.75 = 0.26 mMoles.

Since fumaric acid was not determined separately, it was assumed that 95% of theoretical CO₂ was produced (this assumes greater CO₂ production than the acetate standard, which was highly unlikely) as a conservative estimate. The theoretical amount of CO₂ possible from the fumaric acid present in Sample A was 0.27 mMoles. Thus, multiplying the theoretical amount of CO₂ that could be produced by the fumaric acid in Sample A by 95% yields an expected amount of 0.27 x 0.95 = 0.26 mMoles.

From Table 4, the EDDS racemic mixture produced 30% of theoretical CO₂. The theoretical amount of CO₂ from the EDDS in Sample A was 1.44 mMoles. Therefore, the expected amount of CO₂ produced from the EDDS portion of Sample A was 1.44 x 0.3 = 0.43 mMoles, as given in Table 4.

Adding the amounts of CO₂ expected from the EDMS, fumaric and EDDS in Sample A, the total amount was 0.26 mMoles CO₂ from EDMS + 0.26 mMoles CO₂ from fumaric + 0.43 mMoles CO₂ from EDDS isomers = 0.95 mMoles CO₂. Dividing the expected amount (0.95 mMoles CO₂) by the theoretical amount (2.05 mMoles CO₂) gives an expected % theoretical CO₂ produced of 46%. The amount observed was a total of 68% of theoretical.

These results are further summarized in Table 5.

**Table 5.**

| **Expected vs Observed CO**_{**2**} **Production in Sample A** | | | |
|---|---|---|---|
| Compound in Sample A | Theoretical mMoles CO₂ | Expected mMoles CO₂ | % Theor CO₂ Expected |
| EDMS | 0.34 | 0.26 | 75% |
| fumaric acid | 0.27 | 0.26 | 95% |
| EDDS rac. mix | 1.44 | 0.43 | 30% |
| | | **Predicted Total** | |
| | 2.05 | 0.95 | 46% |
| | | **Observed Total** | |
| | 2.05 | 1.40 | 68% |

Another way to evaluate the data was to calculate the amount of CO₂ that would be expected from only the EDDS portion of Sample A.

From Table 5, the expected amount of CO₂ from the EDDS in Sample A was 0.43 mMoles, based on experimental measurements of the EDDS racemic mixture.

The expected amount of CO₂ from the EDMS portion of the sample was 0.26 mMoles and the expected amount of CO₂ from the fumaric acid portion was 0.26 mMoles. If the amounts of expected CO₂ from EDMS and fumaric acid were subtracted from the observed amount of CO₂ produced, we were left with the amount of CO₂ produced by the EDDS portion of the sample = 1.40 mMoles (total CO₂ produced by Sample A) - 0.26 mMoles (predicted amount of CO₂ produced from EDMS in Sample A) - 0.26 mMoles (predicted amount of CO₂ produced from fumaric in Sample A) = 0.88 mMoles CO₂ produced by the EDDS portion of Sample A.

The theoretical amount of CO₂ possible from the EDDS portion of Sample A was 1.44 mMoles CO₂. Therefore, the predicted (and experimentally measured) % theoretical CO₂ produced was 0.43 mMoles divided by 1.44 mMoles = 30%. However, in these tests, the observed % theoretical CO₂ produced calculated for the EDDS portion of Sample A was 0.88 mMoles. Dividing 0.88 mMoles by the theoretical 1.44 mMoles = 61 % theoretical CO₂ produced by the EDDS portion of Sample A. A value of greater than 60% of the theoretical amount of CO₂ produced in this test indicates that a compound was readily biodegradable. The experimentally measured value for the EDDS portion of Sample A was 30%.

The data for the EDDS portion of Sample A indicates that from a biodegradability standpoint, it appears to be an advantage to have a mixture of EDDS and EDMS vs EDDS alone. Table 6 summarizes the above calculations.

**Table 6.**

| **Expected vs Observed CO**_{**2**} **Produced from EDDS in Sample A** | | |
|---|---|---|
| | mMoles CO₂ | % of Theoretical CO₂ |
| Predicted amount CO₂ expected from EDDS portion of Sample A | 0.43 | 30% |
| "Observed" amount of CO₂ produced from EDDS portion of Sample A | 0.88 | 61% (from EDDS only) |

### Example 5:

Ratios (molar) of EDDS to EDMS of 90/10, 80/20, 60/40, 40/60, 20/80 and 10/90 were prepared and titrated with 0.01 M copper solution using Murexide as the indicator. The chelant mixtures were all found to complex copper on an equivalent (equimolar) basis.

## Claims

1. A laundry detergent composition comprising (a) from 1% to 80% by weight of a detergent surfactant selected from nonionic, anionic, cationic, zwitterionic, and ampholytic surfactants and mixtures thereof; (b) from 5% to 80% by weight of at least one detergent builder; and (c) from 0.1 % to 15% by weight of a combination of chelants comprising at least one polyamino disuccinic acid and one or more polyamino monosuccinic acids, or salts thereof.

2. The composition of claim 1 wherein the composition is in liquid form and comprises (a) from 10% to 50% by weight of a detergent surfactant selected from nonionic, anionic, cationic, zwitterionic, and ampholytic surfactants and mixtures thereof; (b) from 10% to 40% by weight of at least one detergent builder; and (c) from 0.1% to 10% by weight of a combination of chelants comprising at least one polyamino disuccinic acid and one or more polyamino monosuccinic acids, or salts thereof.

3. The composition of claim 1 wherein the composition is in granular form and comprises (a) from 5% to 50% by weight of a detergent surfactant selected from nonionic, anionic, cationic, zwitterionic, and ampholytic surfactants and mixtures thereof; (b) from 10% to 40% by weight of at least one detergency builder; and (c) from 0.1% to 10% by weight of a combination of chelants comprising at least one polyamino disuccinic acid and one or more polyamino monosuccinic acids, or salts thereof.

4. An automatic dishwashing composition comprising (a) a mixture of at least one polyamino disuccinic acid and at least one polyamino monosuccinic acid, or salts thereof; and (b) a bleach active salt.

5. The composition of any one of Claims 1-4 wherein the polyamino disuccinic acid has two or more nitrogen atoms wherein two of the nitrogens are bonded to a succinic acid or salt group and said polyamino disuccinic acid has from 10 to 50 carbon atoms which are unsubstituted or substituted with an alkyl group containing 1 to 6 carbon atoms, or an arylalkyl group or alkylaryl group containing 6 to 12 carbon atoms.

6. The composition of Claim 5 wherein the polyamino disuccinic acid has from 2 to 6 nitrogen atoms, the nitrogen atoms being separated by alkylene groups of from 2 to 12 carbon atoms each.

7. The composition of Claim 6 wherein, in the polyamino disuccinic acid, the two nitrogens to which succinic acid or salt groups are attached also have hydrogen as one substituent thereon.

8. The composition of Claim 7 wherein the polyamino disuccinic acid is selected from ethylenediamine-N-N'-disuccinic acid, diethylenetriamine-N-N"-disuccinic acid, triethylenetetraamine-N-N"' disuccinic acid, 1,6-hexamethylenediamine-N,N-disuccinic acid, tetraethylenepentamine-N-N""-disuccinic acid, 2-hydroxypropylene-1,3-diamine-N,N'-disuccinic acid, 1,2-propylenediamine-N,N'-disuccinic acid, 1,3-propylenediamine-N,N'-disuccinic acid, cis-cyclohexanediamine-N,N'-disuccinic acid, trans-cyclohexanediamine-N,N'-disuccinic acid, ethylenebis(oxyethylenenitrilo)-N,N'-disuccinic acid, and combinations thereof.

9. The composition of Claim 8 wherein the polyamino disuccinic acid is ethylenediamine-N,N'-disuccinic acid.

10. The composition of Claim 9 wherein the ethylenediamine-N,N'-disuccinic acid is the S,S isomer.

11. The composition of any one of the preceding Claims wherein the polyamino monosuccinic acid has two or more nitrogen atoms wherein one of the nitrogens is bonded to a succinic acid or salt group and said polyamino monosuccinic acid has from 6 to 50 carbon atoms which are unsubstituted or substituted with an alkyl group containing 1 to 6 carbon atoms, or an arylalkyl group or alkylaryl group containing 6 to 12 carbon atoms.

12. The composition of Claim 11 wherein the polyamino monosuccinic acid has from 2 to 6 nitrogen atoms, the nitrogen atoms being separated by alkylene groups of from 2 to12 carbon atoms each.

13. The composition of Claim 12 wherein, in the polyamino monosuccinic acid, the nitrogen to which the succinic acid or salt group is attached also has hydrogen as one substituent thereon.

14. The composition of Claim 13 wherein the polyamino monosuccinic acid is selected from ethylenediamine-N-monosuccinic acid, diethylenetriamine-N-monosuccinic acid, triethylenetetraamine-N-monosuccinic acid, 1,6-hexamethylenediamine-N-monosuccinic acid, tetraethylenepentamine-N-monosuccinic acid, 2-hydroxypropylene-1,3-diamine-N-monosuccinic acid, 1,2-propylenediamine-N-monosuccinic acid, 1,3-propylenediamine-N-monosuccinic acid, cis-cyclohexanediamine-N-monosuccinic acid, trans-cyclohexanediamine-N-monosuccinic acid, and ethylenebis(oxyethylenenitrilo)-N-monosuccinic acid.

15. The composition of Claim 14 wherein the polyamino monosuccinic acid is ethylenediamine-N-monosuccinic acid.

16. The composition of Claim 15 wherein the ethylenediamine-N-monosuccinic acid is the S isomer.

17. The composition of any of the preceding Claims wherein the polyamino substituent of the polyamino disuccinic acid and polyamino monosuccinic acid are the same.

18. The composition of Claim 17 wherein the polyamino disuccinic acid is ethylenediamine-N,N'-disuccinic acid and the polyamino monosuccinic acid is ethylenediamine-N-monosuccinic acid.

19. The composition of any of the preceding Claims wherein the molar ratio of the polyamino disuccinic acid to the polyamino monosuccinic acid is from 99:1 to 5:95.

20. The composition of any one of the preceding Claims 1-16 incorporating from 2% to 40% by weight of a bleach active salt.

21. The composition of Claim 20 wherein the bleach active salt is selected from sodium perborates, sodium percarbonates, and mixtures thereof.

22. A method of laundering fabrics comprising contacting the fabrics with an aqueous solution containing the composition of any one of Claims 1, 2, or 3.

23. A process for removing H₂S from a fluid comprising contacting said fluid with an aqueous solution at a pH suitable for removing H₂S wherein said solution contains higher valence polyvalent metal chelates of a combination of chelating agents comprising at least one polyamino disuccinic acid and one or more polyamino monosuccinic acids, or salts thereof.

24. A process for removing NOₓ from a fluid comprising contacting the fluid with an aqueous solution of lower valence state polyvalent metal chelates comprising a combination of at least one polyamino disuccinic acid and one or more polyamino monosuccinic acids, or salts thereof.

25. A method of electroless deposition of copper upon a non-metallic surface receptive to the deposited copper including a step of contacting the non-metallic surface with an aqueous solution comprising a soluble copper salt and a combination of chelants comprising at least one polyamino disuccinic acid and one or more polyamino monosuccinic acids, or salts thereof.

26. A composition for chelating a metal comprising at least one polyamino discuccinic acid and at least one polyamino monosuccinic acid.

## Patentansprüche

1. Waschmittelzusammensetzung umfassend
(a) von 1 Gew.-% bis 80 Gew.-% eines oberflächenaktiven Waschmittels, ausgewählt aus nichtionischen, anionischen, kationischen, zwitterionischen und ampholytischen oberflächenaktiven Mitteln und Gemischen davon;
(b) von 5 Gew.-% bis 80 Gew.-% mindestens eines Waschmittel-Builders; und
(c) von 0,1 Gew.-% bis 15 Gew.-% einer Chelantenkombination, umfassend mindestens eine Polyamin-Disuccinsäure und eine oder mehrere Polyamin-Monosuccinsäuren oder Salze davon.

2. Zusammensetzung nach Anspruch 1, wobei die Zusammensetzung in flüssiger Form vorliegt und
(a) von 10 Gew.-% bis 50 Gew.-% eines oberflächenaktiven Waschmittels, ausgewählt aus nichtionischen, anionischen, kationischen, zwitterionischen und ampholytischen oberflächenaktiven Mitteln und Gemischen davon;
(b) von 10 Gew.-% bis 40 Gew.-% mindestens eines Waschmittel-Builders; und
(c) von 0,1 Gew.-% bis 10 Gew.-% einer Chelantenkombination, umfassend mindestens eine Polyamin-Disuccinsäure und eine oder mehrere Polyamin-Monosuccinsäuren oder Salze davon umfaßt.

3. Zusammensetzung nach Anspruch 1 wobei die Zusammensetzung in granularer Form vorliegt und
(a) von 5 Gew.-% bis 50 Gew.-% eines oberflächenaktiven Waschmittels, ausgewählt aus nichtionischen, anionischen, kationischen, zwitterionischen und ampholytischen oberflächenaktiven Mitteln und Gemischen davon;
(b) von 10 Gew.-% bis 40 Gew.-% mindestens eines Waschmittel-Builders; und
(c) von 0,1 Gew.-% bis 10 Gew.-% einer Chelantenkombination, umfassend mindestens eine Polyamin-Disuccinsäure und eine oder mehrere Polyamin-Monosuccinsäuren oder Salze davon umfaßt.

4. Geschirrspülautomat-Zusammensetzung, umfassend
(a) ein Gemisch aus mindestens einer Polyamin-Disuccinsäure und mindestens einer Polyamin-Monosuccinsäure oder Salzen davon; und
(b) ein bleichaktives Salz.

5. Zusammensetzung nach einem der Ansprüche 1 bis 4, wobei die Polyamin-Disuccinsäure zwei oder mehr Stickstoffatome aufweist, wobei zwei der Stickstoffatome an eine Succinsäure- oder Salzgruppe gebunden sind und die Polyamin-Disuccinsäure 10 bis 50 Kohlenstoffatome aufweist, die nichtsubstituiert oder mit einer Alkylgruppe mit 1 bis 6 Kohlenstoffatomen oder einer Arylalkylgruppe oder Alkylarylgruppe mit 6 bis 12 Kohlenstoffatomen substituiert sind.

6. Zusammensetzung nach Anspruch 5 wobei die Polyamin-Disuccinsäure 2 bis 6 Stickstoffatome aufweist, wobei die Stickstoffatome durch Alkylengruppen mit jeweils 2 bis 12 Kohlenstoffatomen getrennt sind.

7. Zusammensetzung nach Anspruch 6, wobei in der Polyamin-Disuccinsäure die beiden Stickstoffe, an welche die Succinsäure- oder Salzgruppen gebunden sind, auch Wasserstoff als einen Substituenten daran aufweisen.

8. Zusammensetzung nach Anspruch 7, wobei die Polyamin-Disuccinsäure ausgewählt ist aus Ethylendiamin-N-N'-Disuccinsäure, Diethylentriamin-N-N"-Disuccinsäure, Triethylentetraamin-N-N"'-Disuccinsäure, 1,6-Hexamethylendiamin-N,N'-Disuccinsäure, Tetraethylenpentamin-N-N""-Disuccinsäure, 2-Hydroxypropylen-1,3-Diamin-N,N'-Disuccinsäure, 1,2-Propylendiamin-N,N'-Disuccinsäure, 1,3-Propylendiamin-N,N'-Disuccinsäure, cis-Cyclohexandiamin-N,N'-Disuccinsäure, trans-Cyclohexandiamin-N,N'-Disuccinsäure, Ethylenbis(Oxyethylen-nitrilo)-N,N'-Disuccinsäure, und Kombinationen davon.

9. Zusammensetzung nach Anspruch 8, wobei die Polyamin-Disuccinsäure Ethylendiamin-N,N'-Disuccinsäure ist.

10. Zusammensetzung nach Anspruch 9, wobei die Ethylendiamin-N,N'-Disuccinsäure das S,S-Isomer ist.

11. Zusammensetzung nach einem der vorhergehenden Ansprüche, wobei die Polyamin-Monosuccinsäure zwei oder mehr Stickstoffatome aufweist, wobei einer der Stickstoffe an eine Succinsäure- oder Salzgruppe gebunden ist und die Polyamin-Monosuccinsäure 6 bis 50 Kohlenstoffatome aufweist, die nicht substituiert oder mit einer Alkylgruppe mit 1 bis 6 Kohlenstoffatomen oder einer Arylalkylgruppe oder Alkylarylgruppe mit 6 bis 12 Kohlenstoffatomen substituiert sind.

12. Zusammensetzung nach Anspruch 11, wobei die Polyamin-Monosuccinsäure 2 bis 6 Stickstoffatome aufweist, welche durch Alkylengruppen mit jeweils 2 bis 12 Kohlenstoffatomen getrennt sind.

13. Zusammensetzung nach Anspruch 12, wobei in der Polyamin-Monosuccinsäure der Stickstoff, an welchen die Succinsäure- oder Salzgruppe gebunden ist, auch Wasserstoff als einen Substituenten daran aufweist.

14. Zusammensetzung nach Anspruch 13, wobei die Polyamin-Monosuccinsäure ausgewählt ist aus: Ethylendiamin-N-Monosuccinsäure, Diethylentriamin-N-Monosuccinsäure, Triethylentetraamin-N-Monosuccinsäure, 1,6-Hexamethylendiamin-N-Monosuccinsäure, Tetraethylenpentamin-N-Monosuccinsäure, 2-Hydroxypropylen-1,3-Diamin-N-Monosuccinsäure, 1,2-Propylendiamin-N-Monosuccinsäure, 1,3-Propylendiamin-N-Monosuccinsäure, cis-Cyclohexandiamin-N-Monosuccinsäure, trans-Cyclohexandiamin-N-Monosuccinsäure und Ethylenbis(Oxyethylen-nitrilo)-N-Monosuccinsäure.

15. Zusammensetzung nach Anspruch 14, wobei die Polyamin-Monosuccinsäure Ethylendiamin-N-Monosuccinsäure ist.

16. Zusammensetzung nach Anspruch 15, wobei die Ethylendiamin-N-Monosuccinsäure das S-lsomer ist.

17. Zusammensetzung nach einem der vorhergehenden Ansprüche, wobei der Polyaminsubstituent der Polyamin-Disuccinsäure und der Polyamin-Monosuccinsäure derselbe ist.

18. Zusammensetzung nach Anspruch 17, wobei die Polyamin-Disuccinsäure Ethylendiamin-N,N'-Disuccinsäure und die Polyamin-Monosuccinsäure Ethylendiamin-N-Monosuccinsäure ist.

19. Zusammensetzung nach einem der vorhergehenden Ansprüche, wobei das Molverhältnis von Polyamin-Disuccinsäure zu Polyamin-Monosuccinsäure von 99:1 bis 5:95 beträgt.

20. Zusammensetzung nach einem der vorhergehenden Ansprüche 1 bis 16, enthaltend von 2 Gew.-% bis 40 Gew.-% bleichaktives Salz.

21. Zusammensetzung nach Anspruch 20, wobei das bleichaktive Salz ausgewählt ist aus Natriumperboraten, Natriumpercarbonaten und Gemischen davon.

22. Verfahren zum Waschen von Stoffen, umfassend das Inkontaktbringen der Stoffe mit einer die Zusammensetzung nach einem der Ansprüche 1, 2 oder 3 enthaltenden wäßrigen Lösung.

23. Verfahren zum Entfernen von H₂S aus einem Fluid, umfassend das Inkontaktbringen des Fluids mit einer wäßrigen Lösung bei einem für die Entfernung von H₂S geeigneten pH-Wert, wobei die Lösung polyvalente Metallchelate in einer höheren Valenzstufe einer Kombination von Cheliermitteln enthält, die mindestens eine Polyamin-Disuccinsäure und eine oder mehrere Polyamin-Monosuccinsäuren oder Salze davon umfassen.

24. Verfahren zum Entfernen von NO_{X} aus einem Fluid, umfassend das Inkontaktbringen des Fluids mit einer wäßrigen Lösung aus polyvalenten Metallchelaten in einer niedrigen Valenzstufe, umfassend eine Kombination aus mindestens einer Polyamin-Disuccinsäure und einer oder mehrerer Polyamin-Monosuccinsäuren oder Salzen davon.

25. Verfahren zur stromlosen Abscheidung von Kupfer auf eine nichtmetallische Oberfläche, die für das abgelagerte Kupfer aufnahmefähig ist, umfassend einen Schritt des Inkontaktbringens der nichtmetallischen Oberfläche mit einer wäßrigen Lösung umfassend ein lösliches Kupfersalz und eine Kombination von Chelanten umfassend mindestens eine Polyamin-Disuccinsäure und eine oder mehrere Polyamin-Monosuccinsäuren oder Salze davon.

26. Zusammensetzung zum Chelieren eines Metalls, umfassend mindestens eine Polyamin-Disuccinsäure und mindestens eine Polyamin-Monosuccinsäure

## Revendications

1. Composition de lessive détergente comprenant
(a) de 1 % à 80 % en poids d'un tensioactif détergent sélectionné parmi les tensioactifs non-ioniques, anioniques, cationiques, zwitterioniques et ampholytes et des mélanges de ceux-ci ; (b) de 5 % à 80 % en poids d'au moins un adjuvant de détergence ; et (c) de 0,1 % à 15 % en poids d'une combinaison de chélatants comprenant au moins un acide polyaminodisuccinique et un ou plusieurs acides polyaminomonosucciniques, ou des sels de ceux-ci.

2. Composition selon la revendication 1, dans laquelle la composition est sous forme liquide et comprend (a) de 10 % à 50 % en poids d'un tensioactif détergent sélectionné parmi les tensioactifs non-ioniques, anioniques, cationiques, zwitterioniques et ampholytes et des mélanges de ceux-ci ; (b) de 10 % à 40 % en poids d'au moins un adjuvant de détergence ; et (c) de 0,1 % à 10 % en poids d'une combinaison de chélatants comprenant au moins un acide polyaminodisuccinique et un ou plusieurs acides polyaminomonosucciniques, ou des sels de ceux-ci.

3. Composition selon la revendication 1, dans laquelle la composition est sous forme granulaire et comprend (a) de 5 % à 50 % en poids d'un tensioactif détergent sélectionné parmi les tensioactifs non-ioniques, anioniques, cationiques, zwitterioniques et ampholytes et des mélanges de ceux-ci ; (b) de 10 % à 40 % en poids d'au moins un adjuvant de détergence ; et (c) de 0,1 % à 10 % en poids d'une combinaison de chélatants comprenant au moins un acide polyaminodisuccinique et un ou plusieurs acides polyaminomonosucciniques, ou des sels de ceux-ci.

4. Composition pour lave-vaisselle comprenant (a) un mélange d'au moins un acide polyaminodisuccinique et d'au moins un acide polyaminomonosuccinique, ou des sels de ceux-ci ; et (b) un sel de blanchiment actif.

5. Composition selon l'une quelconque des revendications 1 à 4, dans laquelle l'acide polyaminodisuccinique comporte deux ou plus de deux atomes d'azote, où 2 de ces atomes d'azote sont liés à un groupe acide succinique ou sel et ledit acide polyaminodisuccinique comporte de 10 à 50 atomes de carbone qui sont non substitués ou substitués par un groupe alkyle contenant de 1 à 6 atomes de carbone, ou par un groupe arylalkyle ou un groupe alkylaryle contenant de 6 à 12 atomes de carbone.

6. Composition selon la revendication 5, dans laquelle l'acide polyaminodisuccinique comporte de 2 à 6 atomes d'azote, les atomes d'azote étant séparés par des groupes alkylène comportant de 2 à 12 atomes de carbone chacun.

7. Composition selon la revendication 6, dans laquelle, dans l'acide polyaminodisuccinique, les deux atomes d'azote auxquels les groupes acide succinique ou sel sont liés ont également de l'hydrogène en tant que substituant.

8. Composition selon la revendication 7, dans laquelle l'acide polyaminodisuccinique est sélectionné parmi l'acide éthylènediamine-N,N'-disuccinique, l'acide di-éthylènetriamine-N,N"-disuccinique, l'acide triéthylènetétraamine-N,N"'-disuccinique, l'acide 1,6-hexaméthylènediamine-N,N'-disuccinique, l'acide tétraéthylènepentamine-N,N""-disuccinique, l'acide 2-hydroxypropylène-1,3-diamine-N,N'-disuccinique, l'acide 1,2-propylènediamine-N,N'-disuccinique, l'acide 1,3-propylènediamine-N,N'-disuccinique, l'acide cis-cyclohexanediamine-N,N'-disuccinique, l'acide trans-cyclohexanediamine-N,N'-disuccinique, l'acide éthylènebis-(oxyéthylènenitrilo)-N,N'-disuccinique, et des combinaisons de ceux-ci.

9. Composition selon la revendication 8, dans laquelle l'acide polyaminodisuccinique est l'acide éthylènediamine-N,N'-disuccinique.

10. Composition selon la revendication 9, dans laquelle l'acide éthylènediamine-N,N'-disuccinique est l'isomère S,S.

11. Composition selon l'une quelconque des revendications précédentes, dans laquelle l'acide polyaminomonosuccinique comporte deux ou plus de deux atomes d'azote, où un des atomes d'azote est lié à un groupe acide succinique ou sel et ledit acide polyaminomonosuccinique comporte de 6 à 50 atomes de carbone qui sont non substitués ou substitués par un groupe alkyle contenant de 1 à 6 atomes de carbone, ou par un groupe arylalkyle ou un groupe alkylaryle contenant de 6 à 12 atomes de carbone.

12. Composition selon la revendication 11, dans laquelle l'acide polyaminomonosuccinique comporte de 2 à 6 atomes d'azote, les atomes d'azote étant séparés par des groupes alkylène comportant de 2 à 12 atomes de carbone chacun.

13. Composition selon la revendication 12, dans laquelle, dans l'acide polyaminomonosuccinique, l'atome d'azote auquel le groupe acide succinique ou sel est lié a également de l'hydrogène en tant que substituant.

14. Composition selon la revendication 13, dans laquelle l'acide polyaminomonosuccinique est sélectionné parmi l'acide éthylènediamine-N-monosuccinique, l'acide diéthylènetriamine-N-monosuccinique, l'acide triéthylène-tétraamine-N-monosuccinique, l'acide 1,6-hexaméthylène-diamine-N-monosuccinique, l'acide tétraéthylènepentamine-N-monosuccinique, l'acide 2-hydroxypropylène-1,3-diamine-N-monosuccinique, l'acide 1,2-propylènediamine-N-mono-succinique, l'acide 1,3-propylènediamine-N-mono-succinique, l'acide cis-cyclohexanediamine-N-mono-succinique, l'acide trans-cyclohexanediamine-N-mono-succinique et l'acide éthylènebis(oxyéthylènenitrilo)-N-monosuccinique.

15. Composition selon la revendication 14, dans laquelle l'acide polyaminomonosuccinique est l'acide éthylènediamine-N-monosuccinique.

16. Composition selon la revendication 15, dans laquelle l'acide éthylènediamine-N-monosuccinique est l'isomère S.

17. Composition selon l'une quelconque des revendications précédentes, dans laquelle le substituant polyamino de l'acide polyaminodisuccinique et de celui de l'acide polyaminomonosuccinique sont identiques.

18. Composition selon la revendication 17, dans laquelle l'acide polyaminodisuccinique est l'acide éthylènediamine-N,N'-disuccinique et l'acide polyaminomonosuccinique est l'acide éthylènediamine-N-monosuccinique.

19. Composition selon l'une quelconque des revendications précédentes, dans laquelle le rapport molaire de l'acide polyaminodisuccinique à l'acide polyaminomonosuccinique est de 99:1 à 5:95.

20. Composition selon l'une quelconque des revendications 1 à 16 précédentes incorporant de 2 % à 40 % en poids d'un sel de blanchiment actif.

21. Composition selon la revendication 20, dans laquelle le sel de blanchiment actif est sélectionné parmi les perborates de sodium, les percarbonates de sodium et des mélanges de ceux-ci.

22. Procédé de blanchissage de tissus comprenant la mise en contact des tissus avec une solution aqueuse contenant la composition selon l'une quelconque des revendications 1, 2 ou 3.

23. Procédé pour éliminer H2S d'un fluide, comprenant la mise en contact dudit fluide avec une solution aqueuse à un pH approprié pour éliminer H2S, dans lequel ladite solution contient des chélates métalliques polyvalents de valence supérieure d'une combinaison d'agents chélatants comprenant au moins un acide polyaminodisuccinique et un ou plusieurs acides polyaminomonosucciniques, ou des sels de ceux-ci.

24. Procédé pour éliminer NOx d'un fluide comprenant la mise en contact dudit fluide avec une solution aqueuse de chélates métalliques polyvalents de valence inférieure comprenant une combinaison d'au moins un acide polyaminodisuccinique et d'un ou de plusieurs acides polyaminomonosucciniques, ou des sels de ceux-ci.

25. Procédé de dépôt de cuivre sans courant sur une surface non métallique réceptive au cuivre déposé, comprenant une étape de mise en contact de la surface non métallique avec une solution aqueuse comprenant un sel de cuivre soluble et une combinaison de chélatants comprenant au moins un acide polyaminodisuccinique et un ou plusieurs acides polyaminomonosucciniques, ou des sels de ceux-ci.

26. Composition pour chélater un métal comprenant au moins un acide polyaminodisuccinique et au moins un acide polyaminomonosuccinique.
